# EUROPEAN PATENT APPLICATION

(11) **EP 4 770 021 A1**
(43) Date of publication of application: **01.07.2026**
(21) Application number: 25225773.8
(22) Date of filing: 19.12.2025
(51) Int. Cl.: H04L 12/40

(54) **WIRED COMMUNICATIONS NETWORK EXPANSION DEVICE FOR SECURITY SURVEILLANCE NETWORK**

(30) Priority: 30.12.2024 US 202419005678
(71) Applicant: Robert Bosch GmbH, 70442 Stuttgart (DE)
(72) Inventor: Yu, Zhen, 70442 Stuttgart (DE); Bugler, Malcolm, 70442 Stuttgart (DE); Mohnkern, Steve, 70442 Stuttgart (DE); Dietrich, Justin, 70442 Stuttgart (DE)
(74) Representative: Winter, Brandl - Partnerschaft mbB

(57) **Abstract**

Systems and methods related to an electronic communications system expansion device. The device includes a control input/output interface, a first bus interface, a second bus interface, and an electronic processor. The processor is configured to, when operating in the expander mode, receive, from a control panel, a first communication according to a first communications protocol at the control input/output interface, and output, from both the first serial communications bus interface and the second serial communications bus interface, the first communication according to a second communications protocol, the second communications protocol being a wired communications protocol. The processor is further configured to, when operating in the extender mode, receive, at the first bus interface, a second communication according to the second communications protocol from a first electronic communications device, and output the second communication according to the second communications protocol to a second electronic communications device via the second bus interface.

## Description

### FIELD

This application relates generally to the field of wired serial communications networks, in particular, for a security surveillance system.

### BACKGROUND

Security surveillance systems may be implemented as a serial communications network including a control panel communicatively coupled to various peripheral devices. Such peripheral devices may include sensor modules (for example, surveillance cameras, infrared sensors, RFID/card scanners, etc.), human interface modules (for example, keypads, touchscreen displays, etc.), and output modules (for example, audio alarms, visual alert systems, etc.). The control panel may communicate with each of these peripheral devices via wired, half-duplex communications.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate aspects, examples, aspects, and features of concepts that include the claimed subject matter and explain various principles and advantages of those aspects, examples, aspects, and features.
FIG. 1 is a block diagram illustrating a communications system according to various examples.
FIG. 2 illustrates an electronic communications expansion device of the system of FIG. 1 according to various examples.
FIG. 3 illustrates a control panel of the system of FIG. 1 according to various examples.
FIG. 4 is a flowchart of a method of expanding network communications implemented by the device of FIG. 2 in accordance with various examples.
FIG. 5A is a block diagram illustrating a communications system including the device of FIG. 2 in accordance with various examples.
FIG. 5B is a block diagram illustrating a communications system including the device of FIG. 2 in accordance with various examples.
FIG. 5C is a block diagram illustrating a communications system including the device of FIG. 2 in accordance with various examples.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of examples, aspects, and features illustrated.

In some instances, the apparatus and method components have been represented where appropriate by conventional symbols in the drawings, showing only those specific details that are pertinent to understanding the of various aspects, examples, aspects, and features so as not to obscure the disclosure with details that will be readily apparent to those of ordinary skill in the art having the benefit of the description herein.

### DETAILED DESCRIPTION

Security surveillance systems implemented with wired communications may be limited in the physical area that the network can effectively cover. For example, for a large premise (for example, an airport, a super warehouse, a mall, an exhibition center, etc.), longer connections (and additional peripheral devices) between peripheral (i.e., devices on the edge of the network) devices and a central control panel may be necessary. However, long connections (for example, approximately 1000 ft) are susceptible to higher wire resistance, which may introduce too large of a voltage drop across the connection for a peripheral device's working voltage range. Additionally, long connections are susceptible to higher capacitance loads. Any device added to the connection will introduce an additional capacitance load to the connection, which may result in distortion of communication signals through the connection. Thus, the network may be limited by both the distance between a peripheral device and the control panel and the number of peripheral devices on a given connection.

One solution to implement a wired network over a wide area is to install multiple independent systems across the desired area. However, such systems may be complicated and expensive to implement and manage. Another solution is to have a "master" control panel manage several "slave" control panels that each manage a respective number of peripheral devices. However, again, such a system may be expensive as the software and processing power required for both the master and the slave control panels may be considerably large.

To address these problems, examples presented herein provide an electronic communications expansion device for implementation in a wired serial communications network. The expansion device is configured to operate in either one of an expander mode or an extender mode. As described in more detail below, both modes allow for more devices to be added to the same network and for the network to cover a wider physical/geographical area.

Some aspects relate to an electronic communications system expansion device. The device includes a control input/output interface, a first serial communications bus interface, a second serial communications bus interface, and an electronic processor. The electronic processor is configured to, when operating in the expander mode, receive, from a control panel, a first communication according to a first communications protocol at the control input/output interface, and output, from both the first serial communications bus interface and the second serial communications bus interface, the first communication according to a second communications protocol, the second communications protocol being a wired communications protocol. The electronic processor is further configured to, when operating in the extender mode, receive, at the first serial communications bus interface, a second communication according to the second communications protocol from a first electronic communications device, and output the second communication according to the second communications protocol to a second electronic communications device via the second serial communications bus interface.

Some aspects relate to a wired communications network comprising a plurality of electronic communications system expansion devices, each one of the plurality of electronic communications system expansion devices including a control interface, a first serial communications bus interface, a second serial communications bus interface, and an electronic processor. The electronic processor is configured to, when operating in the expander mode, receive, from a control panel, a first communication according to a first communications protocol, and output, from both the first serial communications bus interface and the second serial communications bus interface, the first communication according to a second communications protocol, the second communications protocol being a wired communications protocol. The electronic processor is further configured to, when operating in the extender mode, receive, at the first serial communications bus interface, a second communication according to the second communications protocol from a first electronic communications device, and output the second communication according to the second communications protocol to a second electronic communications device via the second serial communications bus interface.

Some aspects relate to a method of operating an electronic communications system expansion device of a wired security surveillance communications network, the electronic communications system expansion device including a control interface, a first serial communications bus interface, and a second serial communications bus interface. The method includes, when operating the device in the expander mode, receiving, from a control panel, a first communication according to a first communications protocol, and outputting, from both the first serial communications bus interface and the second serial communications bus interface, the first communication according to a second communications protocol, the second communications protocol being a wired communications protocol. The method further includes, when operating the device in the extender mode, receiving, at the first serial communications bus interface, a second communication according to the second communications protocol from a first electronic communications device, and outputting the second communication according to the second communications protocol to a second electronic communications device via the second serial communications bus interface.

Before any aspects, features, or instances are explained in detail, it is to be understood that the aspects, features, or instances are not limited in their application to the details of construction and the arrangement of components set forth in the following description or illustrated in the following drawings. Other instances are possible and are capable of being practiced or of being carried out in various ways.

It should also be noted that a plurality of hardware and software-based devices, as well as a plurality of different structural components may be utilized in various implementations. Aspects, features, and instances may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one instance, the electronic based aspects of the invention may be implemented in software (for example, stored on non-transitory computer-readable medium) executable by one or more processors. As a consequence, it should be noted that a plurality of hardware and software-based devices, as well as a plurality of different structural components may be utilized to implement the invention. For example, "control units" and "controllers" described in the specification can include one or more electronic processors, one or more memories including a non-transitory computer-readable medium, one or more input/output interfaces, and various connections (for example, a system bus) connecting the components.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

It should also be understood that although certain drawings illustrate hardware and software located within particular devices, these depictions are for illustrative purposes only. In some embodiments, the illustrated components may be combined or divided into separate software, firmware, and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable connections or links.

Thus, in the claims, if an apparatus or system is claimed, for example, as including an electronic processor or other element configured in a certain manner, for example, to make multiple determinations, the claim or claim element should be interpreted as meaning one or more electronic processors (or other element) where any one of the one or more electronic processors (or other element) is configured as claimed, for example, to make some or all of the multiple determinations collectively. To reiterate, those electronic processors and processing may be distributed.

Also, it is to be understood that the phraseology and terminology used herein is for the purpose of description and should not be regarded as limiting. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect. Also, electronic communications and notifications may be performed using any known means including wired connections, wireless connections, etc.

For ease of description, some or all of the example systems presented herein are illustrated with a single exemplar of each of its component parts. Some examples may not describe or illustrate all components of the systems. Other instances may include more or fewer of each of the illustrated components, may combine some components, or may include additional or alternative components.

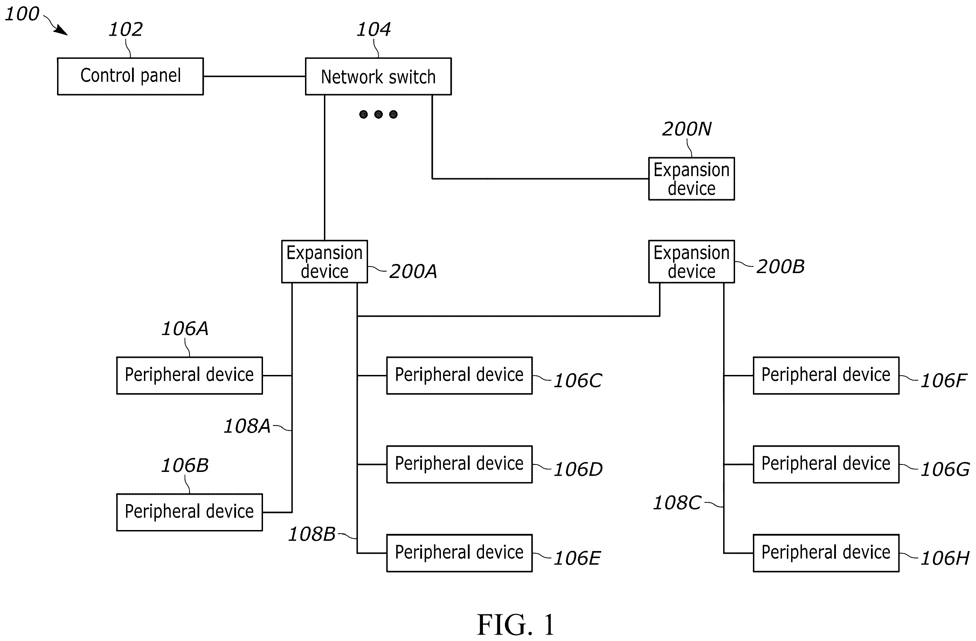

FIG. 1 is a block diagram of a security surveillance system network 100 in accordance with some aspects. In some aspects, the security surveillance system network 100 is for monitoring a single, physical building structure or area (for example, a commercial or business building, a store, a warehouse facility, a shipping yard, etc.). The network 100 includes a control panel 102 and one or more electronic communication expansion devices (referred to herein as expansion devices) 200A and 200B (singularly referred to herein as expansion device 200). The control panel 102 is configured to communicate directly (with either no device between or through only a network switch) via a wired or wireless communication with at least one expansion device 200. In the illustrated example, the control panel 102 is communicatively coupled to the expansion device 200A according to a wired communication (for example, Ethernet). In such aspects, the control panel 102 may communicate with the expansion device 200A through a network switch 104. In some aspects, the control panel 102 is communicatively coupled to an expansion device 200 via a wireless communications protocol (for example, a land mobile radio (LMR) network, a cellular network (for example, a Long Term Evolution (LTE) network), combinations or derivatives thereof, and other suitable networks, including future-developed network architectures).

The control panel 102 may be any kind of user electronic communications device suitable for handling and processing communications of the network 100. The control panel 102 may be or include, for example, a desktop or laptop computer, a server, a tablet, and the like.

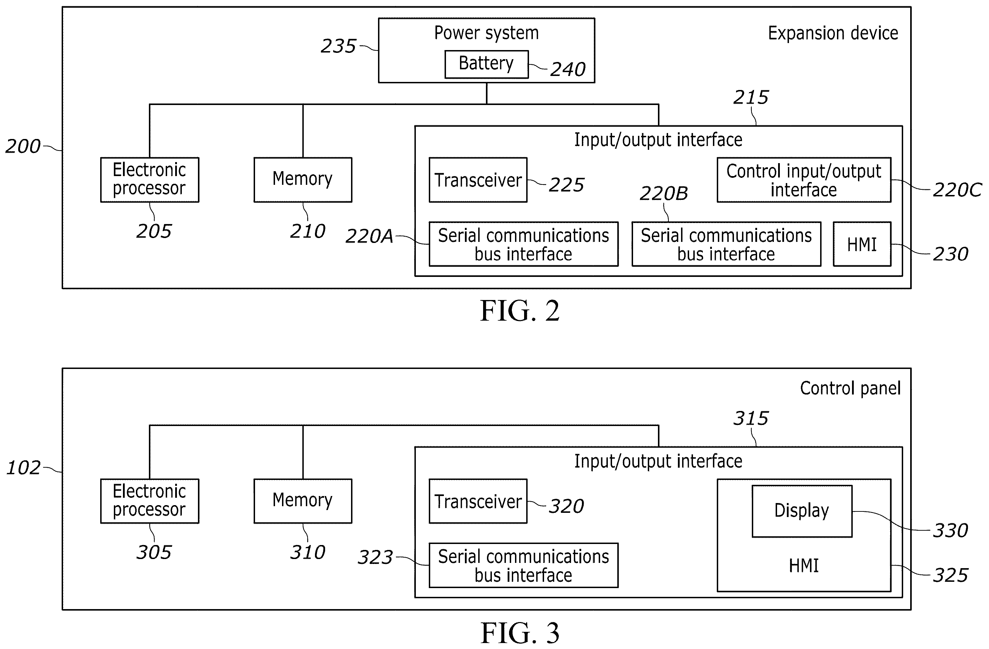

Each expansion device 200A, 200B (described in more detail below with respect to FIG. 2) includes at least two serial communication interfaces (ports) through which the respective expansion device 200A, 200B each exchange wired serial communications with one or more additional electronic communications devices. The additional devices may include one or more peripheral devices (for example, peripheral devices 106A - 106H, singularly referred to herein as peripheral device 106), one or more expansion devices 200, the control panel 102, or some combination thereof depending on the particular topology of the network 100. The peripheral devices 106A - 106B include one or more security monitoring/access control devices being or including sensor modules (for example, surveillance cameras, infrared sensors, RFID/card scanners, etc.), human interface modules (for example, keypads, touchscreen displays, etc.), and output modules (for example, visual alarms, audio alarms, etc.). The peripheral devices 106 may include, for example, one or more sensors (for example, biometric sensors, RFID tag sensors, surveillance cameras, motion sensors, etc.), human interfaces (for example, a keypad, a pushbutton, etc.), entryway access control modules (for example, an electronic door lock or a window lock, etc.), audible/visual alarms (for example, a siren, a warning light, etc.) and the like.

In the illustrated example, the expansion device 200A communicates with peripheral devices 106A and 106B via a serial communications bus 108A. The expansion device 200A also communicates with peripheral devices 106C - 106E and the expansion device 200B via a serial communications bus 108B. The expansion device 200B shares the serial communications bus 108B with the expansion device 200A and communicates with devices 106F - 106H via a serial communications bus 108C. In some aspects, the expansion device 200 may be configured to provide power (for example, via the respective serial communications buses 108A, 108B, and 108C or via a separate connection) to one or more devices connected downstream from the expansion device 200. In such aspects, the devices downstream of the expansion device 200 may include one or more of a peripheral device 106, another expansion device 200, or some combination thereof. For example, in the example illustrated in FIG. 1, the expansion device 200A may be configured to provide power (for example, from a battery 240 described with respect to FIG. 2 below) to the peripheral devices 106A - 106E and the expansion device 200B. Additionally, with reference to the example illustrated in FIG. 1, the expansion device 200B may be configured to provide power to the peripheral devices 106F - 106H.

As also described in more detail below, each expansion device 200 is configured to operate in either one of an expander mode and an extender mode. The particular mode alters how communications are handled at the serial communications bus interfaces (described in more detail below with respect to FIG. 2) of the respective expansion devices 200. In the expander mode, the expansion device 200 receives communications from the control panel 102 at a separate input/output interface according to a first communications protocol (for example, Ethernet), converts the received communication to a second communications protocol for transmission on its respective serial communications buses, and outputs the communication according to the second communications protocol to its serial communications bus interfaces. In the extender mode, the expansion device 200 receives a communication at one of its serial communications bus interfaces and outputs (forwards) the communication (unless the communication is addressed to the expansion device 200 itself) from the other serial communications bus interface.

In the illustrated example, the expansion device 200A operates in the expander mode and the expansion device 200B operates in the extender mode. Thus, the expansion device 200A, in the expander mode, is configured to receive communications from the control panel 102, convert and transmit the communications according to a second communications protocol to the devices on both buses 108A and 108B. The expansion device 200B, in the extender mode, is configured to receive the communications from the bus 108B and forward the communications (according to the same second protocol) to the devices 106F - 106H of the bus 108C.

As used herein, with respect to a single expansion device 200, the term "upstream" refers to devices (and respective connections) between (and including) the control panel 102 and the expansion device 200. As also used herein, the term "downstream" with respect to a single expansion device 200 refers to devices between the expansion device 200 and any peripheral devices at the edge of the network 100. As an example, with respect the expansion device 200A of FIG. 1, the control panel 102 is a device upstream from the expansion device 200A and devices 106A - 106H and the expansion device 200B are devices downstream from the expansion device 200A.

It should also be understood, as further described below, that the topology of the network 100 is not limited to the example illustrated in FIG. 1. For example, any number of expansion devices 200N (operating in the expander mode) may be communicatively coupled directly to the control panel 102 or through the network switch 104 with any number of peripheral device 106 or expansion devices 200 (operating in the extender mode) communicatively coupled downstream therefrom.

It should also be further understood that, although the examples described herein are generally in regard to communications output by the control panel 102 and transmitted to one or more devices downstream from the control panel 102 within the network 100, one or more of the downstream devices may also provide communications back to the control panel 102. For example, the peripheral device 106F may be configured to transmit a communication to the control panel 102 through the bus 108C to the expansion device 200, then to the expansion device 200A through the bus 108B, and then to the control panel 102 through the network switch 104.

FIG. 2 is a diagram of an example of the expansion device 200. In the aspect illustrated, the expansion device 200 includes an electronic processor 205, a memory 210, an input/output interface 215. In some aspects, the expansion device 200 includes a transceiver 225. The illustrated components, along with other various modules and components (not shown) are coupled to each other by or through one or more control or data buses that enable communication therebetween.

The electronic processor 205 obtains and provides information (for example, from the memory 210 and/or the input/output interface 215), and processes the information by executing one or more software instructions or modules, capable of being stored, for example, in a random access memory ("RAM") area of the memory 210 or a read only memory ("ROM") of the memory 210 or another non-transitory computer readable medium (not shown). The software can include firmware, one or more applications, program data, filters, rules, one or more program modules, and other executable instructions. The electronic processor 205 is configured to retrieve from the memory 210 and execute, among other things, software related to the control processes and methods described herein.

The memory 210 can include one or more non-transitory computer-readable media and includes a program storage area and a data storage area. The program storage area and the data storage area can include combinations of different types of memory, as described herein.

The input/output interface 215 is configured to receive input and to provide system output. The input/output interface 215 obtains information and signals from, and provides information and signals to, (for example, over one or more wired and/or wireless connections) devices both internal and external to the expansion device 200. The input/output interface may include one or more wired interfaces (e.g., a USB port, an Ethernet port, etc.) and/or one or more wireless transceivers (for example, the transceiver 225) or interfaces (configured, for example, to transmit and/or receive information via one or more wireless communication protocols such as 802.11a/b/g/n, Bluetooth, near field communication (NFC), ZigBee, and so forth).

For example, the input/output interface 215 includes a first serial communications bus interface 220A and a second serial communications bus interface 220B. As described above, the expansion device 200 is configured to communication with one or more devices of the network 100 via a respective wired bus connection at each of the first serial communications bus interfaces 220A, 220B.

In some aspects, the expansion device 200 includes a control input/output interface 220C for communicatively coupling to the control panel 102 of the network 100 (for example, when operating in the expander mode). The interface 220C may be, for example a port for a wired connection (for example, an Ethernet port).

In some aspects, the expansion device 200 includes a transceiver 225 (part of the input/output interface 215). The transceiver 225 is configured to transmit and receive wireless communications (for example, from the control panel 102 when the expansion device 200 is operating in the expander mode). The transceiver 225 may include various digital and analog components, which for brevity are not described herein and which may be implemented in hardware, software, or a combination of both. Some aspects include separate transmitting and receiving components, for example, a transmitter and a receiver, instead of a combined transceiver 225.

Optionally, in some aspects, the input/output interface 215 includes a human machine interface (HMI) 230. The HMI 230 receives input from, and provides output to, users of the expansion device 200. The HMI 230 may include a keypad, switches, buttons, soft keys, indictor lights, haptic vibrators, a display (e.g., a touchscreen), or some combination thereof. In some aspects, the expansion device 200 is user configurable via the HMI 230. For example, the mode in which the expansion device 200 operates in (for example, the expander mode or the extender mode) is selectable by a user via the HMI 230 in some instances (for example, via a switch or a touchscreen display).

For example, in some aspects the HMI 230 includes a rotary switch (not shown) in which a user may use to set which mode (the expander mode or the extender mode) in which the expansion device 200 is to operate in. In some aspects, a user may use the HMI 230 to set an IP communications address for the expansion device 200 (for example, based on the position of the switch).

In some aspects, the expansion device 200 also includes a power supply system 235. The power supply system 235 includes, among other things, a battery 240. The battery 240 includes one or more batteries that provide power to one or more components of the expansion device 200. In some embodiments, the battery 240 is separate from the expansion device 200 (for example, disposed within an enclosure separate from the expansion device 200). In some aspects, as mentioned above, the expansion device 200 is further configured to provide power from the power supply system 235 to one or more additional devices of the network 100 (for example, one or more peripheral devices 106 connected downstream from the expansion device 200).

FIG. 3 is a diagram of an example of the control panel 102 in accordance with some aspects. In the example provided, the control panel 102 includes an electronic processor 305, a memory 310, and an input/output interface 315 including a transceiver 320 and, optionally, a human machine interface (HMI) 325. The illustrated components, along with other various modules and components (not shown) are coupled to each other by or through one or more control or data buses that enable communication therebetween.

The electronic processor 305 obtains and provides information (for example, from the memory 310 and/or the input/output interface 315) and processes the information by executing one or more software instructions or modules, capable of being stored, for example, in a random access memory ("RAM") area of the memory 310 or a read only memory ("ROM") of the memory 310 or another non-transitory computer readable medium (not shown). The software can include firmware, one or more applications, program data, filters, rules, one or more program modules, and other executable instructions. The electronic processor 305 is configured to retrieve from the memory 310 and execute, among other things, software to carry out the methods described herein.

The memory 310 can include a program storage area and a data storage area. The program storage area and the data storage area can include combinations of different types of memory, as described herein.

The input/output interface 315 is an electronic communication interface configured to receive input and to provide system output. The input/output interface 315 obtains information and signals from, and provides information and signals to, (for example, over one or more wired and/or wireless connections) devices both internal and external to the control panel 102. The input/output interface 315 may include a wireless transmitter or transceiver for wirelessly communicating over the network 100. Alternatively, or in addition to a wireless transmitter or transceiver, the input/output interface 315 may include a port for receiving a cable, such as an Ethernet cable, for communicating over the network 100 or a dedicated wired connection. It should be understood that, in some aspects, the control panel 102 communicates with other devices through one or more intermediary devices, such as routers, gateways, relays, and the like (for example, the network switch 104 of FIG. 1). In some embodiments, the control panel 102 includes one or more of a communications bus interface 323.

As mentioned above, in some aspects the control panel 102 may include the HMI 325. The HMI 325 receives input from, and provides output to, users of the control panel 102. The HMI 325 may include a keypad, switches, buttons, soft keys, indictor lights, haptic vibrators, a display (for example, the display 330) configured, for example, as a touchscreen, or some combination thereof. In some aspects, the control panel 102 is user configurable via the HMI 325. In some aspects, the user is able to access information received from one or more devices of the network 100 via the HMI 325 of the control panel 102.

The display 330 is a suitable display (for example, a liquid crystal display (LCD) touch screen, or an organic light-emitting diode (OLED) touch screen). In some aspects, the control panel 102 implements a graphical user interface (GUI) (for example, generated by the electronic processor 305, from instructions and data stored in the memory 310, and presented on the display 330), that enables a user to interact with the control panel 102. In some aspects, the control panel 102 enables display remotely, for example, using a display (configured similarly to the display of the HMI 220) of one or more of the devices of the network 100 (for example, one or more of the peripheral devices 106A - 106H or an expansion device 200) or another suitable device in communication with the control panel 102.

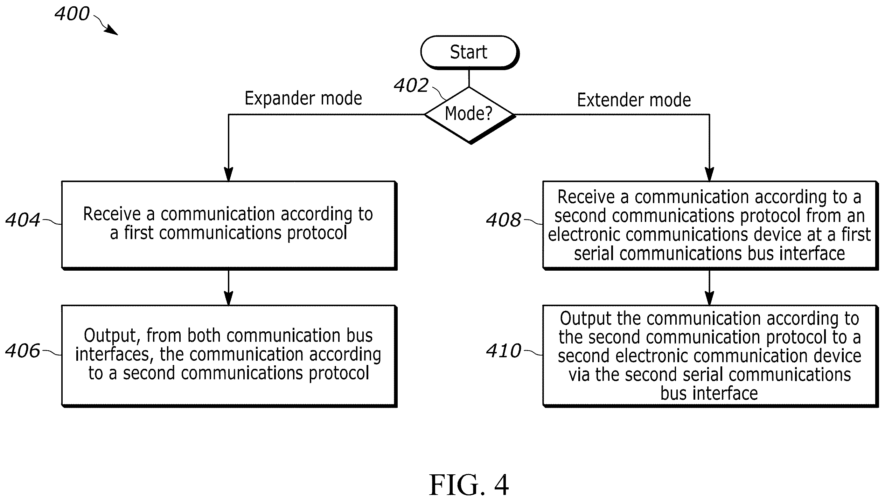

FIG. 4 illustrates an example method 400 of operation of the expansion device 200 in accordance with some aspects. Although the method 400 is described in conjunction with the example network 100 of FIG. 1 as described herein, the method 400 could be used with other network topologies. In addition, the method 400 may be modified or performed differently than the specific example provided. As an example, the method 400 is described as being performed by the expansion device 200 and, in particular, by the electronic processor 205.

At block 402, the electronic processor 205 determines whether the expansion device 200 is in the expander mode or the extender mode. As described above, in some aspects, the mode in which the expansion device 200 operates in is set by a user via the HMI 230. In some aspects, a user sets the mode of the expansion device 200 at the control panel 102 (for example, via the HMI 325). In some aspects, a user sets the mode of the expansion device 200 via a remote device (not shown) in communication with the control panel 102 or directly with the respective expansion device 200.

In instances where the expansion device 200 is operating in the expander mode, at block 404, the electronic processor 205 receives, from the control panel 102 of the network 100, a first communication according to a first communications protocol. The first communications protocol is a wired or a wireless communications protocol. For example, in some aspects the first communications protocol is a Ethernet communications protocol. In some aspects, the first communications protocol is a Wi-Fi communications protocol.

Subsequently, at block 406, the electronic processor 205 is configured to output, from both the first serial communications bus interface 220A and the second serial communications bus interface 220B, the first communication according to a second communications protocol. The second communications protocol is a wired communications protocol (for example, according to a universal asynchronous receiver-transmitter (UART) protocol). In some aspects, the second communications protocol is a half-duplex communications protocol. In some aspects, the first communications protocol is the same communications protocol as the second communications protocol. Alternatively, in some aspects, the first communications protocol and the second communications protocol are different communications modalities (whether different wired communications modalities, or wireless and wired communications modalities, respectively). In some aspects, the electronic processor 205 is configured to convert the received communication from the first communications protocol to the second communications protocol.

It should be understood that the first communication refers to a communication addressed to one or more devices of the network 100 other than the expansion device 200. In some aspects, the expansion device 200 receives communications from the control panel 102 addressed to the expansion device 200 itself. In such instances, the expansion device 200 processes the communications addressed to the expansion device 200 accordingly. Otherwise, the expansion device 200 outputs the communication from both serial communications bus interfaces 220A and 220B as described with respect to block 406.

In some aspects, the expansion device 200 acts as a transparent device between the control panel 102 and the devices downstream from the expansion device 200. In other words, the expansion device 200 provides communications from the control panel 102 to the devices downstream of the expansion device 200 without modification to the original content of the communication beyond conversion to the second communications protocol. For example, in some instances, the first communication is a UART communication and the control panel 102 packages the UART communication as an Internet Protocol (IP) package. The control panel 102 then transmits the IP-packaged communication to the expansion device 200 immediately downstream from the control panel 102 according to an IP communications protocol. The expansion device 200, upon receiving the IP-packed communication and unpackages the communication, restoring the communication to the original UART communication. The expansion device 200 then transmits the UART communication (unless the UART communication is addressed to the expansion device 200 itself) to any of the devices connected downstream from the device 200 via the first and second communications bus interfaces 220A and 220B.

Although the example described above is in terms of the expansion device 200 receiving a communication from the control panel 102 communicatively coupled upstream from the expansion device 200, it should be understood that the expansion device 200 is configured to provide communications received from devices downstream from the expansion device 200 (received at either serial communications bus interfaces 220A, 220B) to the control panel 102. In some aspects, the electronic processor 205 converts the communication received at the respective serial communications bus interface 220A, 220B from the second communications protocol to the first communications protocol (for example, from a UART communication to a IP communication). In some aspects, the communication provided to the control panel 102 from the expansion device 200 is not modified beyond repackaging the communication according to the first communications protocol.

Returning to block 402, in instances where the expansion device 200 is in the extender mode, at block 408 the electronic processor 205 receives a communication according to the second communications protocol from an electronic communications device at a first serial communications bus interface (for example, either one of the serial communications bus interfaces 220A, 220B). At block 410, the electronic processor 205 outputs the communication according to the second communications protocol to a second electronic communications device via the other serial communications bus interface (for example, the other one of the two serial communications bus interfaces 220A, 220B). In other words, the expansion device 200, in the extender mode, receives communications at one of the two serial communications bus interfaces 220A, 220B and outputs (forwards) the communications at the other of the two serial communications bus interfaces (unless the communication is addressed to the expansion device 200 itself). The expansion device 200 acts as a transparent device to the devices of the network 100 upstream and downstream from it for communications other than those addressed to the expansion device 200 itself. The first electronic communications device is a peripheral device 106 or another expansion device 200 either upstream or downstream from expansion device 200. Likewise, the second electronic communications device is a peripheral device 106 or another expansion device 200 opposite the network flow of the first electronic communications device (for example, downstream or upstream, respectively). In some aspects, either one of the first or the second electronic communications device is the control panel 102.

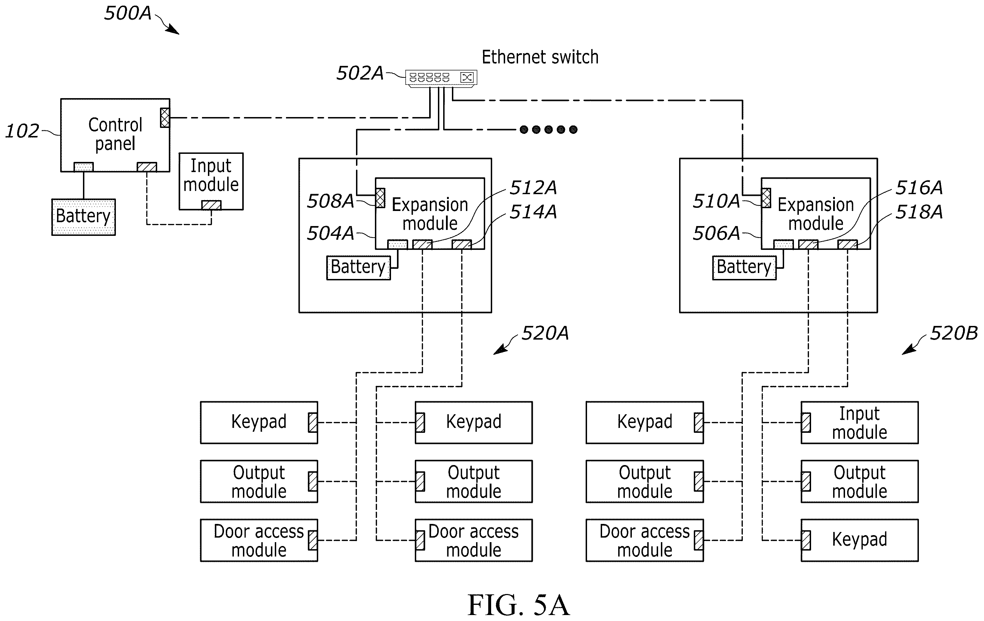

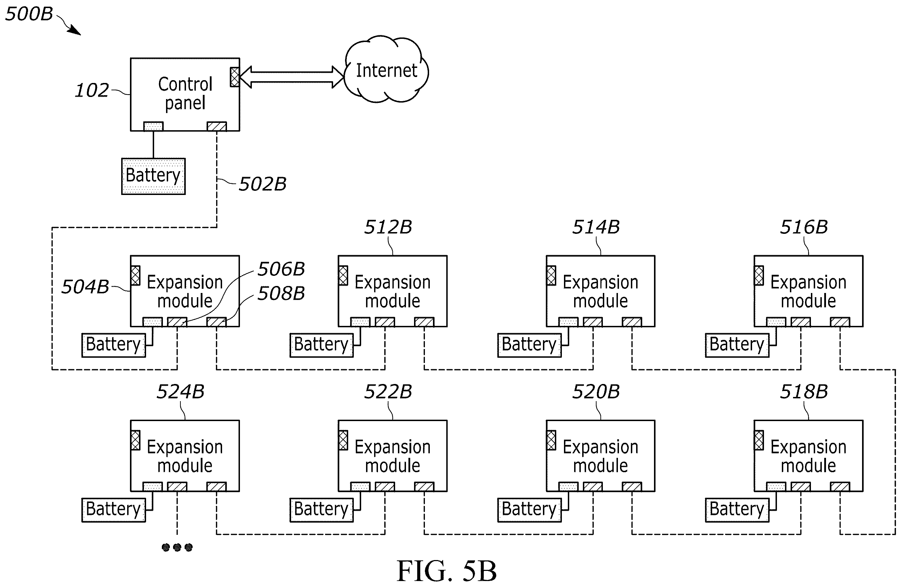

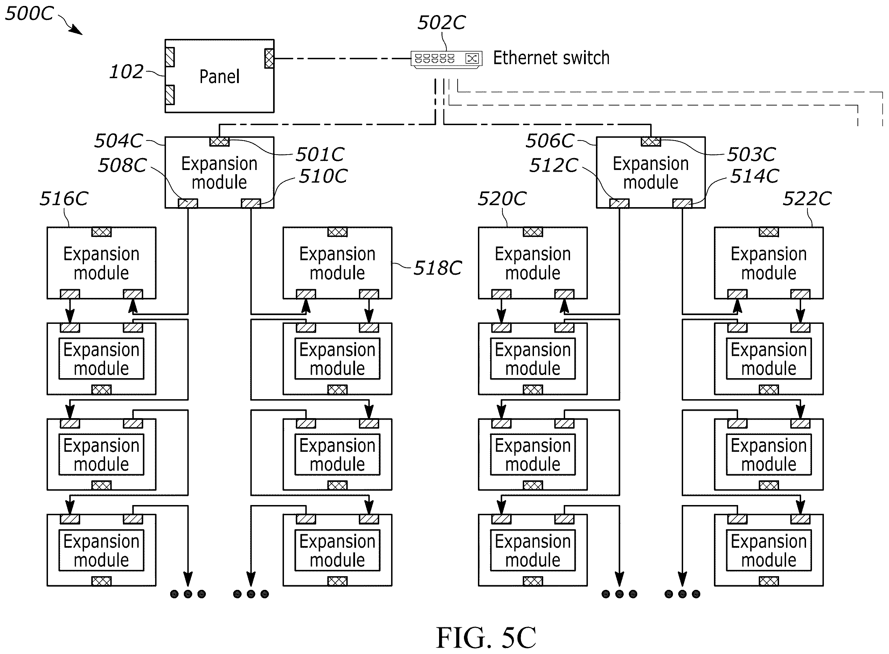

In some aspects, as described above, the network 100 may be a different topology including any number of expansion devices 200 each respectively operating in either mode. FIGS. 5A - 5C each illustrate an example of another topology of the network 100. It should be understood that, although FIGS. 5B and 5C illustrate expansion devices 200 being communicatively coupled directly with each other that, in some aspects, such connections may be shared with one or more additional electronic communications devices (for example, additional expansion devices 200 and/or peripheral devices 106). It should be understood that, although not illustrated in the examples described below, that any one wired serial communications bus connection between two expansion devices 200 may include any number of peripheral devices 106.

In the example illustrated in FIG. 5A, the network 500A includes the control panel 102 communicatively coupled via the network switch 502A to expansion devices 504A and 506A. Both expansion devices 504A and 506A in the illustrated example are operating in the expander mode. Each expansion device 504A and 506A exchanges communications according to a first communications protocol with the control panel 102 upstream from them (via the network switch 502A) through the respective control input/output interface 508A and 510A. The communications received at each expansion device 504A and 506A from the control panel 102 are output at both respective communications bus interfaces 512A, 514A and 516A, 518A according to the second communications protocol to each of the devices connected downstream from the respective expansion device 504A and 506A (for example, peripheral devices 520A and 520B). The peripheral devices 520A and 522A, as illustrated and previously described above, are security monitoring/access control devices. Each expansion device 200, operating in the expander mode, allows for parallel expansion (i.e., additional branches) of the network 100 from a single control panel 102. As described above with respect to FIG. 4, the communications between the control panel 102 and an expansion device 200 immediately downstream from the control panel 102 may be according to either a wired or a wireless communications protocol.

FIG. 5B illustrates another example topology of a network 500B including a control panel 102 communicatively coupled (via a wired connection 502B) to a first expansion device 504B operating in the extender mode. The first expansion device 504B receives communications at a first serial bus communications interface 506B from the control panel 102 and outputs the communications to the device connected to a second serial communications bus interface 508B (in the illustrated example, the expansion device 512B). As illustrated in FIG. 5B, a series of expansion devices 200, each operating in the extender mode, may be serially connected to each other (for example, expansion devices 512B, 514B, 516B, 518B, 520B, and 522B) to physically extend the communications between the control panel 102 and devices downstream from the control panel 102 with minimized degradation to communication quality.

FIG. 5C illustrates an example network 500C including the control panel 102 communicatively coupled (via a network switch 502C) to a plurality of expansion devices 504C and 506C both operating in the expander mode. Each expansion device 504C and 506C are communicatively coupled (via control input/output interfaces 501C and 503C, respectively) to the control panel 102. Each expansion device 504C and 506C are further communicatively coupled (via serial communications interfaces 508C, 510C and 512C, 514C, respectively) to another expansion device 516C, 518C and 520C, 522C, each operating in the extender mode. Each expansion device 516C, 518C, 520C, and 522C may further be communicatively coupled to another expansion device operating in the extender mode to physically extend communications between the control panel 102 and the devices downstream from the control panel 102.

As illustrated in FIGS. 5A - 5C, a plurality of expansion devices 200, operating in either the extender mode or the expander mode, may be integrated into the network 100 to extend or expand the physical distance of wired communications of the network. For example, in some instances the distance between an expansion device 200 communicatively coupled (via a wired connection) to another device (i.e., the control panel 102, another expansion device 200, or a peripheral device 106) is approximately 1000 feet (ft). As described above, this may provide an inexpensive solution for adding more devices to the security surveillance system and covering larger physical areas for surveillance.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain implementations and should in no way be construed to limit the claims.

Accordingly, it is to be understood that the above description is intended to be illustrative and not restrictive. Many aspects and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future aspects. In sum, it should be understood that the application is capable of modification and variation.

Various features and advantages of the aspects presented herein are set forth in the following claims.

## Claims

1. An electronic communications system expansion device, the device comprising:
a control input/output interface (220C);
a first serial communications bus interface (220A);
a second serial communications bus interface (220B); and
an electronic processor (205) configured to
when operating in the expander mode,
receive, from a control panel (102), a first communication according to a first communications protocol at the control input/output interface (220C), and
output, from both the first serial communications bus interface (220A) and the second serial communications bus interface (220B), the first communication according to a second communications protocol, the second communications protocol being a wired communications protocol,
and, when operating in the extender mode,
receive, at the first serial communications bus interface (220A), a second communication according to the second communications protocol from a first electronic communications device, and
output the second communication according to the second communications protocol to a second electronic communications device via the second serial communications bus interface (220B).

2. The device of claim 1, wherein the first serial communications protocol is a wireless communications protocol.

3. The device of claim 1, wherein the first serial communications protocol is a wired communications protocol, wherein, preferably, the first serial communications protocol is the same communications protocol as the second communications protocol.

4. The device of claim 1, wherein the first electronic communications device is a second electronic communications system expansion device.

5. The device of claim 1, wherein the first electronic communications device is the control panel (102).

6. The device of claim 1, wherein the second electronic communications device is a peripheral device (106) including at least one selected from the group consisting of a biometric sensor, an RFID tag sensor, a surveillance camera, a motion sensor, an entryway access control module, and an alarm system.

7. The device of claim 1, wherein the second communications protocol is a half-duplex communications protocol.

8. A wired communications network comprising a plurality of electronic communications system expansion devices, each one of the plurality of electronic communications system expansion devices including
a control interface,
a first serial communications bus interface (220A),
a second serial communications bus interface (220B), and
an electronic processor (205) configured to:
when operating in the expander mode,
receive, from a control panel (102), a first communication according to a first communications protocol, and
output, from both the first serial communications bus interface (220A) and the second serial communications bus interface (220B), the first communication according to a second communications protocol, the second communications protocol being a wired communications protocol,
and, when operating in the extender mode,
receive, at the first serial communications bus interface (220A), a second communication according to the second communications protocol from a first electronic communications device, and
output the second communication according to the second communications protocol to a second electronic communications device via the second serial communications bus interface (220B).

9. The system of claim 8, wherein the plurality of electronic communications system expansion devices includes a first electronic communications system expansion device operating in the expander mode and a second device operating in the extender mode.

10. The system of claim 8, wherein the first communications protocol is a wireless communications protocol.

11. The system of claim 8, wherein the first serial communications protocol is a wired communications protocol, wherein, preferably, the first serial communications protocol is the same communications protocol as the second communications protocol.

12. The system of claim 8, wherein the first electronic communications device is a second electronic communications system expansion device or the control panel (102).

13. The system of claim 8, wherein the second electronic communications device is a peripheral device (106) including at least one selected from the group consisting of a biometric sensor, an RFID tag sensor, a surveillance camera, a motion sensor, an entryway access control module, and an alarm system.

14. The system of claim 8, wherein the second communications protocol is a half-duplex communications protocol.

15. A method of operating an electronic communications system expansion device of a wired security surveillance communications network, the electronic communications system expansion device including a control interface, a first serial communications bus interface (220A), and a second serial communications bus interface (220B), the method comprising:
when operating the device in the expander mode,
receiving, from a control panel (102), a first communication according to a first communications protocol, and
outputting, from both the first serial communications bus interface (220A) and the second serial communications bus interface (220B), the first communication according to a second communications protocol, the second communications protocol being a wired communications protocol,
and, when operating the device in the extender mode,
receiving, at the first serial communications bus interface (220A), a second communication according to the second communications protocol from a first electronic communications device, and
outputting the second communication according to the second communications protocol to a second electronic communications device via the second serial communications bus interface (220B).
